# EUROPÄISCHE PATENTSCHRIFT

(11) **EP 3 235 943 B1**
(45) Veröffentlichungstag und Bekanntmachung des Hinweises auf die Patenterteilung: **27.02.2019**
(21) Anmeldenummer: 17163068.4
(22) Anmeldetag: 27.03.2017
(51) Int. Cl.: D06F 58/20, D06F 37/20

(54) **WÄSCHETROCKNUNGSGERÄT MIT WÄRMEPUMPE UND ZUGEHÖRIGEM ANTRIEB**
LAUNDRY DRYING DEVICE WITH HEAT PUMP AND ITS DRIVE
SÈCHE-LINGE COMPRENANT UNE POMPE À CHALEUR ET ENTRAÎNEMENT ASSOCIÉ

(30) Priorität: 19.04.2016 DE 102016206525
(43) Veröffentlichungstag der Anmeldung: 25.10.2017
(73) Patentinhaber: BSH Hausgeräte GmbH, 81739 München (DE)
(72) Erfinder: Drebant, Alexander, 12207 Berlin (DE); Kohlrusch, Frank, 13187 Berlin (DE); Korte, Martin, 14057 Berlin (DE); Scholze, Tobias, 10439 Berlin (DE)

(56) Entgegenhaltungen:
- DE-A1-102013 226 398
- JP-A- 2008 088 919
- US-A1- 2010 107 703
- US-B1- 6 499 714

## Beschreibung

Die Erfindung betrifft ein Wäschetrocknungsgerät, aufweisend eine Bodengruppe und einen Antrieb einer Wärmepumpe, welcher Antrieb mit mehreren elastischen Grommets verbunden ist und die Grommets mittels Bolzen, die durch die Grommets hindurchgeführt sind, an der Bodengruppe befestigt sind. Die Erfindung ist insbesondere vorteilhaft anwendbar auf Wäschetrockner und Waschtrockner mit einem Kompressor als Antrieb.

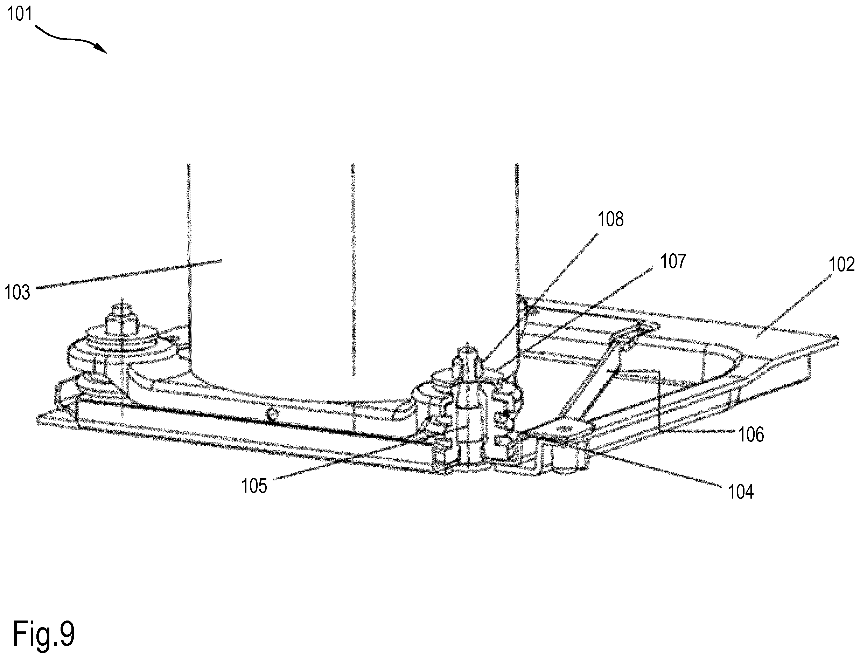

Fig.9 zeigt in Schrägansicht einen Ausschnitt aus einem Wäschetrockner 101 mit einer Bodengruppe 102 aus Kunststoff, die einen Antrieb einer Wärmepumpe in Form eines Kompressors 103 trägt. Während des Betriebes der Wärmepumpe erzeugt der Kompressor 103 Schwingungen, die mitunter Ursache für Geräuschbildungen im Wäschetrockner 101 sein können. Zur Aufnahme der Schwingungen und somit zur Geräuschminderung steht der Kompressor 103 auf drei Gummielementen, den so genannten Grommets 104. Bei einer Montage werden zunächst drei Bolzen 105 durch entsprechende Löcher in einem Metallrahmen oder in einer Metallplatte 106 gepresst. Diese Metallplatte 106 wird anschließend auf die Bodengruppe 102 geschraubt. In unmittelbarer Nähe der Bolzen 105 bildet die Metallplatte 106 einen Flansch. Im nächsten Schritt wird der Kompressor 103, an dessen drei Füßen sich jeweils ein Grommet 104 befindet, über die Bolzen 105 gestülpt. Dabei stehen die Grommets 104 ausschließlich mit der Metallplatte 106 in Kontakt, und zwar durch Auflage auf dem Blech und Pressung am Flansch. Oberhalb der Grommets 104 wird jeweils eine Unterlegscheibe 107 mit einer selbstsichernden Mutter 108 auf einen separaten Absatz der Bolzen 105 befestigt. Durch das Eigengewicht des Kompressors 103 werden die Grommets 104 dabei während des Betriebes so weit gestaucht, dass zwischen der Unterlegscheibe 107 und einem jeweiligen Grommet 104 ein Spalt auftritt. Durch die Unterlegscheibe107 wird verhindert, dass der Kompressor 103 sowohl beim An- und Ausschalten als auch bei einem Transport vom der Metallplatte 106 abhebt.

EP 2 559 804 A1 offenbart ein Haushaltsgerät, insbesondere Wäschetrockner oder Waschtrockner, aufweisend eine Antriebseinheit für einen Wärmepumpenkreislauf, in welchem die Antriebseinheit mittels einer mechanischen Befestigungsvorrichtung mit einer anderen Komponente des Haushaltsgeräts verbunden ist, wobei die mechanische Befestigungsvorrichtung ein erstes, an der Antriebseinheit befestigtes Befestigungselement, ein zweites, an der anderen Komponente des Haushaltsgeräts befestigtes Befestigungselement und ein elastisches Grommet, das die Befestigungselemente miteinander verbindet, aufweist.
Jedoch sind diese Anordnungen vergleichsweise kostenintensiv sowie wenig vielseitig in Bezug auf eine Positionierung sowie der mechanischen Eigenschaften der Anbindung des Antriebs an die Bodengruppe.
Aus den Druckschriften EP 2 743 394 A1, EP 2 743 395 A1, US 2011/0154676 A1, JP 2007143736 A, JP 2010-057545 A und JP 2008088919 A sind weitere Wäschetrocknungsgeräte der betreffenden Art bekannt.
Die Druckschrift US 2010/107703 A1 zeigt ein Wäschetrocknungsgerät bei dem eine Wärmepumpenkompressor auf einem Verstärkungsblech montiert ist. Das Verstärkungsblech ist wiederum über Grommets elastisch an einer Bodengruppe befestigt.

Die Druckschrift US 6 499 714 B1 zeigt Bolzen zur Befestigung von Maschinen auf einer Grundplatte mittels Grommets. Die Bolzen können in der Grundplatte eingeschraubt oder eingeprest sein. Das Grommet wird von Spannfederscheiben am Bolzen gehalten.
Es ist die Aufgabe der vorliegenden Erfindung, die Nachteile des Standes der Technik zumindest teilweise zu überwinden.
Diese Aufgabe wird gemäß den Merkmalen der unabhängigen Patentansprüche gelöst. Bevorzugte fakultative Ausführungsformen sind insbesondere den abhängigen Patentansprüchen, nachfolgender Beschreibung und beigefügter Zeichnung entnehmbar.
Die Aufgabe wird gelöst durch ein Wäschetrocknungsgerät, aufweisend eine Bodengruppe und einen Antrieb einer Wärmepumpe, welcher Antrieb mit mehreren elastischen Grommets verbunden ist und die Grommets mittels Bolzen, die durch die Grommets hindurchgeführt sind, an der Bodengruppe befestigt sind, wobei die Grommets direkt auf der Bodengruppe aufliegen.

Folglich kann auf die bisher übliche Metallplatte oder den bisher üblichen Metallrahmen verzichtet werden. Dadurch wiederum können sowohl die Komplexität des Aufbaus als auch die Kosten reduziert werden. Insgesamt ergibt sich zudem eine höhere Flexibilität in der Positionierung des Antriebs. Ferner wird es durch den Verzicht der Metallplatte ermöglicht Steifigkeit aus dem System zu nehmen und gleichzeitig über Kunststoffstrukturen Dämpfung in das System einzubringen. Daraus ergeben sich akustische Vorteile während des Betriebs.

Das Wäschetrocknungsgerät ist insbesondere ein Wäschetrockner oder ein kombiniertes Wasch-/Trocknungsgerät ("Waschtrockner"). Das Wäschetrocknungsgerät ist insbesondere ein Haushaltsgerät. Das Wäschetrocknungsgerät ist insbesondere ein Umlufttrockner mit einem umlaufenden Prozessluftkreislauf.

Unter einer Bodengruppe wird insbesondere eine Lagerungs- oder Trägerkomponente zur Befestigung mehrerer funktionaler Komponenten des Wäschetrocknungsgeräts wie eines Antriebs, mindestens eines Wärmetauschers, einer Kondensatwanne usw. verstanden. Die Bodengruppe ist bodenseitig in dem Wäschetrocknungsgerät angeordnet. Sie weist insbesondere einen Grundkörper aus Kunststoff auf und mag auch ganz aus Kunststoff bestehen.

Der Antrieb der Wärmepumpe kann für den Fall einer Kompressor-Wärmepumpe ein Kompressor sein. Jedoch kann z.B. auch eine Stirling-Wärmepumpe oder eine Vuilleumier-Wärmepumpe mit entsprechenden Antrieben verwendet werden.

Der Antrieb ist indirekt über die elastischen Grommets mit der Bodengruppe verbunden bzw. liegt indirekt über die elastischen Grommets auf der Bodengruppe auf.

Unter einem Grommet kann insbesondere ein Ring oder eine Tülle verstanden werden. Die Grommets können aus Gummi bestehen.

Der Bolzen kann ein Steckbolzen oder ein Schraubbolzen (Schraube) sein.

Der Bolzen kann über eine Unterlegscheibe auf dem Grommet aufliegen, insbesondere auf das Grommet drücken. Mittels des Bolzens kann das Grommet gegen die an Widerleger dienende Bodengruppe bewegt werden. Dadurch kann das Grommet zusammengedrückt werden, braucht es aber nicht. Insbesondere kann der Bolzen die Bodengruppe und eine Unterlegscheibe, welche das Grommet zwischen sich aufweisen, insbesondere halten, aufeinander zubewegen.

Der Antrieb kann beispielsweise lösbar oder unlösbar in die Grommets eingerastet, eingeklemmt und/oder auf die Grommets aufgezogen sein. Dazu kann das Grommet seitliche Aufnahmerücksprünge aufweisen, z.B. ringnutartige Rücksprünge. Der Antrieb kann z.B. in einen Rücksprung des jeweiligen Grommets eingebracht worden sein. Alternativ oder zusätzlich kann der Antrieb durch die Bolzen auf die jeweiligen Grommets aufgedrückt werden.

Erfindungsgemäß sind die jeweiligen Bolzen in zumindest innenseitig hülsenförmige Befestigungsbereiche der Bodengruppe aus Kunststoff oder Metall eingebracht. Die Befestigungsbereiche ermöglichen eine lange Kontaktfläche mit dem Bolzen und eine zuverlässige Aufnahme des Bolzens.
Es ist eine Weiterbildung, dass die Bolzen ein Außengewinde zum Aufschrauben einer, insbesondere selbstsichernden, Mutter aufweisen. Auch kann der Bolzen einen z.B. ringförmigen Absatz zum Auflegen einer Unterlegscheibe aufweisen. Die Mutter und die Unterlegscheibe können dazu verwendet werden, das Grommet gegen ein Abheben von der Bodengruppe zu sichern und/oder das Grommet gegen die Bodengruppe zu drücken.
Die hülsenförmigen Befestigungsbereiche können zumindest teilweise in das Durchgangsloch des Grommets eingesteckt sein, um eine präzise und zuverlässige Positionierung des Grommets zu bewirken. Dies kann auch so gesehen werden, dass das Grommet auf einen Teilabschnitt des hülsenförmigen Befestigungsbereichs aufgesteckt sein kann.
Die hülsenförmigen Befestigungsbereiche der Bodengruppe können ganz aus Kunststoff bestehen, was Herstellungskosten senkt.
Es ist noch eine Ausgestaltung, dass die Befestigungsbereiche zumindest innenseitig als Metallhülsen ausgebildet sind, die in Kunststoff der Bodengruppe eingebettet sind. So lässt sich eine besonders hohe Zuverlässigkeit des Befestigungsbereichs erreichen. Zudem können dadurch besonders hohe Kräfte von den Bolzen in die Befestigungsbereiche eingeleitet werden. Die Metallhülsen können innenliegende Schraubgewinde bzw. Innengewinde aufweisen. Um eine Drehung der Metallhülsen zu verhindern, können diese außenseitig mit Vorsprüngen oder Rücksprüngen (z.B. Rippen oder Einkerbungen) versehen sein und/oder nicht rotationssymmetrisch ausgebildet sein. Die Metallhülsen können bei der Herstellung der Bodengruppe mit dem Kunststoff des Grundkörpers der Bodengruppe umspritzt werden.

Es ist eine weitere Ausgestaltung, dass eine Hülse, insbesondere Metallhülse, einem Schaft des Bolzens übergestülpt ist, welche Hülse auf dem Befestigungsbereich, insbesondere einem Rand davon, aufliegt. So kann auf besonders zuverlässige Weise eine Steifigkeit der Verbindung zwischen dem Antrieb und der Bodengruppe erhöht werden. Es ist eine Weiterbildung, dass die Hülse an ihrem anderen Rand auf einer Unterlegscheibe aufliegt, die z.B. durch den Bolzen in Richtung der Bodengruppe gedrückt wird.

Es ist noch eine weitere Ausgestaltung, dass eine zwischen dem Bolzen und dem Grommet befindliche Unterlegscheibe direkt auf dem Befestigungsbereich der Bodengruppe aufliegt. So wird eine erhöhte Steifigkeit der Verbindung zwischen dem Antrieb und der Bodengruppe ohne Zusatzelemente wie eine Hülse o.ä. erreicht. Der Befestigungsbereich kann dazu bis zu der Unterlegscheibe vorgezogen sein. Insbesondere kann der Befestigungsbereich durch das ganze Durchgangsloch des Grommets reichen. Alternativ kann der Bolzen direkt auf dem Befestigungsbereich aufliegen, z.B. mit einem Schraubkopf oder einem Flansch.

Es ist ferner eine Ausgestaltung, dass die Bolzen Schraubbolzen sind, die in die Befestigungsbereiche eingeschraubt sind. Dazu kann der Bolzen ein Außengewinde aufweisen, z.B. an seinem vorderen Endabschnitt. So kann eine Befestigung der Schraubbolzen in der Bodengruppe durch Handhabung von oben erreicht werden.

Es ist eine Ausgestaltung, dass die jeweiligen Bolzen Schraubbolzen sind, die einen vorderen, mit einem ersten Außengewinde versehenen Abschnitt und einen rückwärtigen, mit einem zweiten Außengewinde versehenen Abschnitt aufweisen, mit ihrem vorderen Abschnitt in die Befestigungsbereiche eingeschraubt sind und mit ihrem rückwärtigen Abschnitt das zugehörige Grommet fixieren. Diese Ausgestaltung ergibt den Vorteil, dass eine einfache Befestigung an der Bodengruppe und zudem eine Fixierung des Grommets durch jeweilige Verschraubungsvorgänge erreichbar ist. Zudem sind so die Befestigung an der Bodengruppe und die Fixierung des Grommets unabhängig voneinander einstellbar, z.B. deren Schraubkraft. Ein weitere Vorteil besteht darin, dass der Befestigungsbereich der Bodengruppe, in welchen der Schraubbolzen mit seinem ersten Außengewinde einschraubbar ist, wahlweise als durchgehende Bohrung oder als nicht durchgehendes Sackloch aufführbar ist. Das erste Außengewinde kann in ein Innengewinde des Befestigungsbereichs eingreifen oder als selbstschneidendes Gewinde ausgebildet sein. Das erste Außengewinde kann direkt in das Material der Bodengruppe eingeschraubt sein oder, wie auch weiter unten beschrieben, oder in eine in die Bodengruppe eingebrachte (durchgehende oder nicht gehende) Hülse eingeschraubt sein.

Das erste Außengewinde und das zweite Außengewinde können gleich oder verschieden ausgebildet sein. Beispielsweise können das erste Außengewinde und das zweite Außengewinde ein Rechtsgewinde und ein Linksgewinde sein, einen unterschiedlichen Durchmesser aufweisen (z.B. kann das zweite Außengewinde einen geringeren Durchmesser aufweisen) und/oder eine unterschiedliche Steigung aufweisen usw.

Es ist noch eine Ausgestaltung, dass der vordere Abschnitt und der rückwärtige Abschnitt durch einen Einschraubungsabschnitt getrennt sind. Der Einschraubungsabschnitt dient dem Eingriff durch ein Verschraubungsmittel zum Drehen des Schraubbolzens, z.B. durch einen Schraubenschlüssel. Der Einschraubungsabschnitt kann insbesondere eine eckige Außenkontur aufweisen, z.B. eine sechseckige Außenkontur usw.

Es ist noch eine Ausgestaltung, dass der vordere Abschnitt von dem Einschraubungsabschnitt durch einen - insbesondere ringartigen oder scheibenartigen - Schraubenflansch getrennt ist. Mittels des Schraubenflanschs kann sich der Schraubbolzen besonders zuverlässig und präzise an der Bodengruppe abstützen. Es ist eine zur Verhinderung einer Verdrehung oder Rotation des in die Bodengruppe eingeschraubten und auf der Bodengruppe aufliegenden Schraubbolzens vorteilhafte Ausgestaltung, dass an einer dem vordere Abschnitt zugewandten Unterseite des Schraubenflanschs Einkerbungen vorhanden sind.

Es ist noch eine Ausgestaltung, dass der Einschraubungsabschnitt einen Absatz zu dem rückwärtigen Abschnitt hin bereitstellt. Dies ergibt den Vorteil, dass auf diesen Absatz eine Unterlegscheibe auflegbar ist. Die Unterlegscheibe kann beispielsweise mit einer selbstsichernden Mutter gesichert werden, um ein Abheben des Kompressors zu unterbinden.

Es ist auch eine Ausgestaltung, dass die jeweiligen Bolzen Steckbolzen sind, die durch die Bodengruppe, insbesondere einen zugehörigen Befestigungsbereich, und das Grommet hindurchgesteckt sind. Dadurch kann ein Schraubvorgang zur Einbringung in die Bodengruppe vermieden werden. Die Steckbolzen können einerseits an der Bodengruppe und andererseits an dem Grommet oder einer dazwischenliegenden Unterlegscheibe aufliegen, insbesondere befestigt sein.

Der Steckbolzen kann insbesondere mit der Komponente, in die er zuerst eingeführt worden ist, in Anschlag stehen. Wird der Steckbolzen also zuerst von unten durch die Bodengruppe und dann durch das Grommet gesteckt, wirkt die Bodengruppe als Anschlag. Wird der Steckbolzen zuerst von oben durch das Grommet oder eine Unterlagescheibe gesteckt, wirkt das Grommet bzw. die Unterlegscheibe als Anschlag. Vorderseitig kann der Steckbolzen ein Außengewinde zum Aufschrauben einer Mutter aufweisen.

Es ist außerdem eine Ausgestaltung, dass die Bolzen seitlich vorstehende Vorsprünge oder Flansche zur Auflage auf der Bodengruppe oder an einer Unterlegscheibe aufweisen. So kann eine besonders sichere und zuverlässige Verbindung erreicht werden.

Es ist zudem eine Ausgestaltung, dass die Bodengruppe eine schalenförmige Struktur und/oder eine rippenartige Struktur zur Aufnahme von durch die Bolzen eingebrachten Kräften aufweist. Solche Strukturen sind bei geringem Gewicht sehr stabil. Zudem kann ihre Steifigkeit einfach eingestellt werden, z.B. mittels Variation ihrer Größe, Wandstärke usw.

Es ist zudem auch eine Ausgestaltung, dass die Bodengruppe, insbesondere ihre schalenförmige Struktur und/oder eine rippenartige Struktur, zumindest teilweise verfüllt ist. Dadurch lassen Steifigkeit, Dämpfung und Geräuschoptimierung noch vielseitiger umsetzen.

Das Verfüllen kann z.B. durch Ankleben, Anschweißen usw. von Kunststoffmaterial (auch aus einem anderen Material als dem der Bodengruppe, z.B. aus glasfaserverstärktem Kunststoff) erreicht werden. Als Klebemittel sind z.B. schwingungsabsorbierende Klebemassen geeignet.

Auch kann die Bodengruppe mit Beton und ggf. Bewehrung verfüllt werden.

Ferner kann die Bodengruppe mit Schaum, Styropor, Silikon, Kunststoff, Teer usw. verfüllt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Figuren der beigefügten Zeichnung näher erläutert wird:
- Fig.1A: zeigt als Schnittdarstellung in Seitenansicht ausschnittsweise einen Wäschetrockner gemäß einem ersten Ausführungsbeispiel im Bereich einer Befestigung eines Kompressors an einer Bodengruppe;
- Fig.1B: zeigt in einer Ansicht von schräg oben einen Bolzen des Wäschetrockners gemäß dem ersten Ausführungsbeispiel zur Befestigung des Kompressors an der Bodengruppe;
- Fig.2A: zeigt als Schnittdarstellung in Seitenansicht ausschnittsweise einen Wäschetrockner gemäß einem zweiten Ausführungsbeispiel im Bereich einer Befestigung eines Kompressors an einer Bodengruppe;
- Fig.2B: zeigt in einer Ansicht von schräg oben einen Bolzen und eine Metallhülse des Wäschetrockners gemäß dem zweiten Ausführungsbeispiel zur Befestigung des Kompressors an der Bodengruppe;
- Fig.3A: zeigt als Schnittdarstellung in Seitenansicht ausschnittsweise einen Wäschetrockner gemäß einem dritten Ausführungsbeispiel im Bereich einer Befestigung eines Kompressors an einer Bodengruppe;
- Fig.3B: zeigt in einer Ansicht von schräg oben einen Bolzen des Wäschetrockners gemäß dem dritten Ausführungsbeispiel zur Befestigung des Kompressors an der Bodengruppe;
- Fig.4A: zeigt als Schnittdarstellung in Seitenansicht ausschnittsweise einen Wäschetrockner gemäß einem vierten Ausführungsbeispiel im Bereich einer Befestigung eines Kompressors an einer Bodengruppe;
- Fig.4B: zeigt in einer Ansicht von schräg oben einen Bolzen des Wäschetrockners gemäß dem vierten Ausführungsbeispiel zur Befestigung des Kompressors an der Bodengruppe;
- Fig.5A: zeigt als Schnittdarstellung in Seitenansicht ausschnittsweise einen Wäschetrockner gemäß einem fünften Ausführungsbeispiel im Bereich einer Befestigung eines Kompressors an einer Bodengruppe;
- Fig.5B: zeigt in einer Ansicht von schräg oben einen Bolzen des Wäschetrockners gemäß dem fünften Ausführungsbeispiel zur Befestigung des Kompressors an der Bodengruppe;
- Fig.6: zeigt in einer Ansicht von schräg oben einen Ausschnitt aus der Bodengruppe des Wäschetrockners gemäß einem ersten Ausführungsbeispiel in einem zur Aufnahme des Kompressors vorgesehenen Bereich;
- Fig.7: zeigt in einer Ansicht von schräg oben einen weiteren Ausschnitt aus der Bodengruppe aus Fig.7 in dem zur Aufnahme des Kompressors vorgesehenen Bereich;
- Fig.8: zeigt den zur Aufnahme des Kompressors vorgesehenen Bereich aus Fig.7 ausschnittsweise in einer Ansicht von schräg unten; und
- Fig.9: zeigt in Schrägansicht einen Ausschnitt aus einem Wäschetrockner im Bereich eines Kompressors mit einem Metallblech.

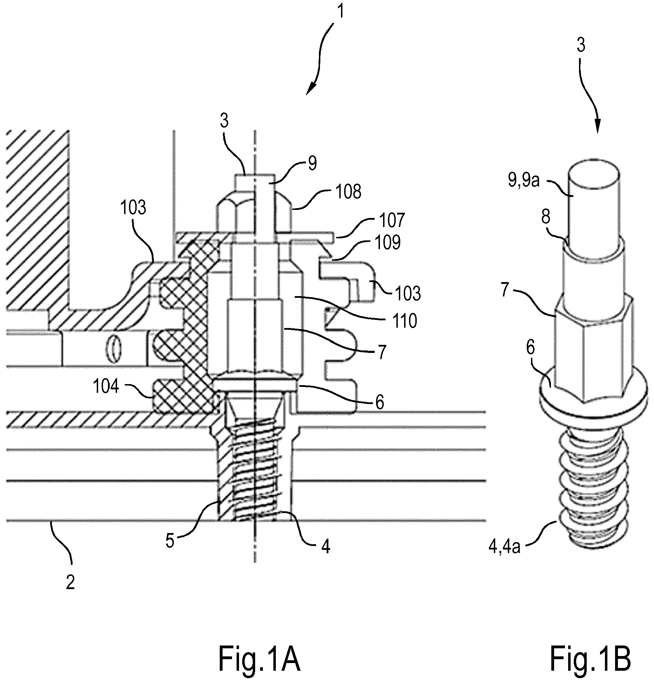

Fig.1A zeigt als Schnittdarstellung in Seitenansicht einen Wäschetrockner 1 im Bereich einer Befestigung eines Kompressors 103 an einer Bodengruppe 2 aus Kunststoff. Fig.1 B zeigt einen Bolzen 3 zur Befestigung des Kompressors 103 an der Bodengruppe 2. Der Bolzen 3 verläuft durch ein Grommet 104. Der Grommet 104 liegt direkt auf der Bodengruppe 2 auf. Der Kompressors 103 ist formschlüssig in einen umlaufenden Rücksprung 109 des Grommets 104 eingesetzt.

Der Bolzen 3 weist an einem vorderen Abschnitt 4 ein Außengewinde 4a auf und ist folglich dort als eine Schraube ausgebildet. Der Bolzen 3 wird von oben bzw. von innen in einen rohr- oder hülsenartigen Befestigungsbereich 5 der Bodengruppe 2 eingeschraubt. Der Bolzen 3 weist einen seitlich vorstehenden Absatz oder Schraubenflansch 6 auf, der sich auf einem oberseitigen Rand des Befestigungsbereichs 5 abstützt. Der Befestigungsbereich 5 kann optional in ein Durchgangsloch 110 des Grommets 104, durch das auch der Bolzen 3 verläuft, hineinragen und dient dann auch der sichereren Positionierung des Grommets 104.

Um das nötige Drehmoment für die Einschraubung auf einfache Weise aufbringen zu können, kann beispielsweise ein Verschraubungsbereich 7 in Form eines Außensechskants (wie gezeigt), eines Innensechskants, eines Innentorx oder eines Kreuzschlitzes usw. in einem Kopf des Bolzens 3 vorgesehen sein.

Ein weiterer Absatz 8 dient dazu, eine Unterlegscheibe 107 aufzulegen. Die Unterlegscheibe 107 kann mit einer selbstsichernden Mutter 108 zu befestigen, um ein Abheben des Kompressors 103 zu unterbinden, z.B. analog zu dem Wäschetrockner 101. Die Mutter 108 ist auf ein weiteres, an einem rückwärtigen Bereich 9 des Bolzens 3 vorhandenes Außengewinde 9a aufschraubbar. Das Grommet 104 wird also zwischen der Bodengruppe 2 und der Unterlegscheibe 107 gehalten bzw. fixiert.

Um den Bolzen 3 gegen Rotation zu sperren, können an einer gewindeseitigen Unterseite des Schraubenflanschs 6, auf dem der Rand des Einschraubbereichs 5 aufliegt, Einkerbungen (o. Abb.) vorgesehen sein.

Der vordere Abschnitt 4 ist also durch den Einschraubungsabschnitt 7 von dem rückwärtigen Abschnitt 9 getrennt und von dem Einschraubungsabschnitt 7 durch den Schraubenflansch 6 getrennt.

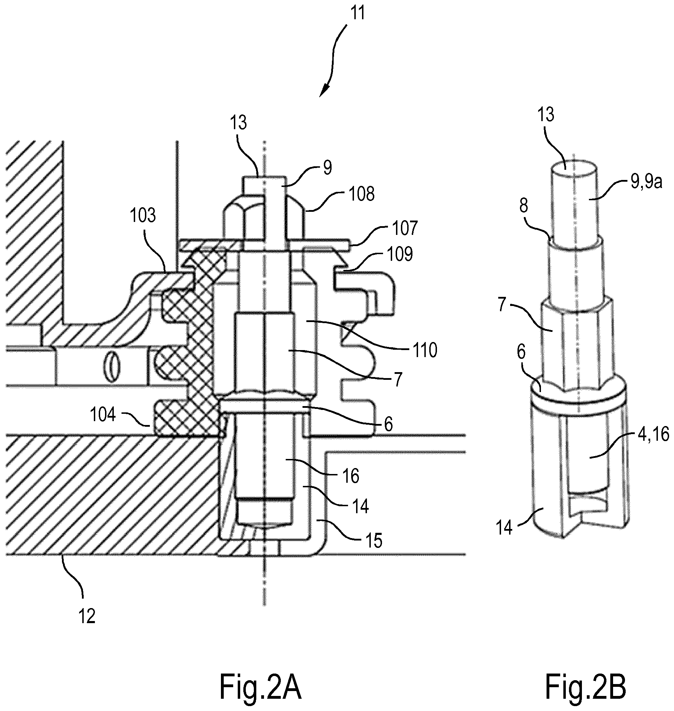

Fig.2A zeigt als Schnittdarstellung in Seitenansicht einen Wäschetrockner 11 im Bereich einer Befestigung eines Kompressors 103 an einer Bodengruppe 12. Fig.2B zeigt einen Bolzen 13 zur Befestigung des Kompressors 103 an der Bodengruppe 12 mit einer Metallbuchse 14 der Bodengruppe 12. Der Bolzen 13 verläuft auch hier durch das Durchgangsloch 110 des Grommets 104.

Das Grommet 104 liegt direkt auf einem Kunststoffbereich der Bodengruppe 12 auf. Die Metallbuchse 14 kann optional in das Durchgangsloch 110 des Grommets 104 hineinragen. Die Metallbuchse 14 dient dann auch der sichereren Positionierung des Grommets 104.

Die Metallbuchse 14 ist mit einem Innengewinde ausgerüstet und an einem Befestigungsbereich 15 in die aus Kunststoff bestehende Bodengruppe 12 eingebettet, z.B. eingespritzt, eingepresst, mit Ultraschall eingebettet und/oder eingeschweißt usw. Der Bolzen 13 wird in die Metallbuchse 14 eingeschraubt. Der Bolzen 13 unterscheidet sich dabei ggf. nur durch die Art seines Außengewindes 16 von dem Bolzen 3. Um die Metallbuchse 14 gegen Rotation zu sperren, kann sie außenseitig von der kreiszylindrischen Form abweisen, z.B. indem sie nicht rotationssymmetrisch gestaltet ist, Längsrippen aufweist usw.

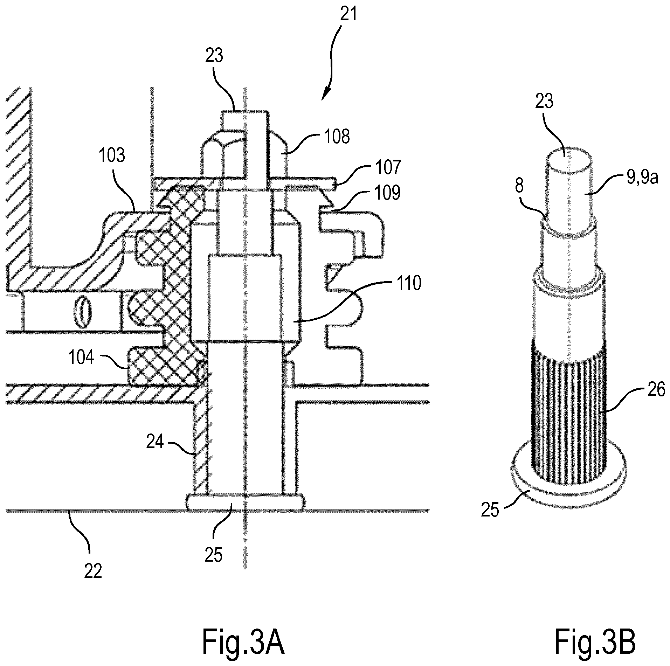

Fig.3A zeigt als Schnittdarstellung in Seitenansicht einen Wäschetrockner 21 im Bereich einer Befestigung eines Kompressors 103 an einer Bodengruppe 22 aus Kunststoff. Fig.3B zeigt einen Bolzen 23 zur Befestigung des Kompressors 103 an der Bodengruppe 22.

Der Bolzen 23 wird hier von unten in einen rohr- oder hülsenförmigen Befestigungsbereich 24 der Bodengruppe 22 eingepresst. Der Bolzen 23 weist fußseitig einen Flansch 25 als Anschlag gegenüber der Bodengruppe 22 auf. Um den Bolzen 23 gegen Rotation zu sperren, kann dieser seitlich umlaufend mit Einkerbungen 26 usw. versehen sein.

Auch der Bolzen 23 kann einen Absatz 8 aufweisen. An seiner der Bodengruppe 22 abgewandten Seite weist der Bolzen 23 ebenfalls ein Außengewinde 9 zum Aufschrauben einer Mutter 108 auf.

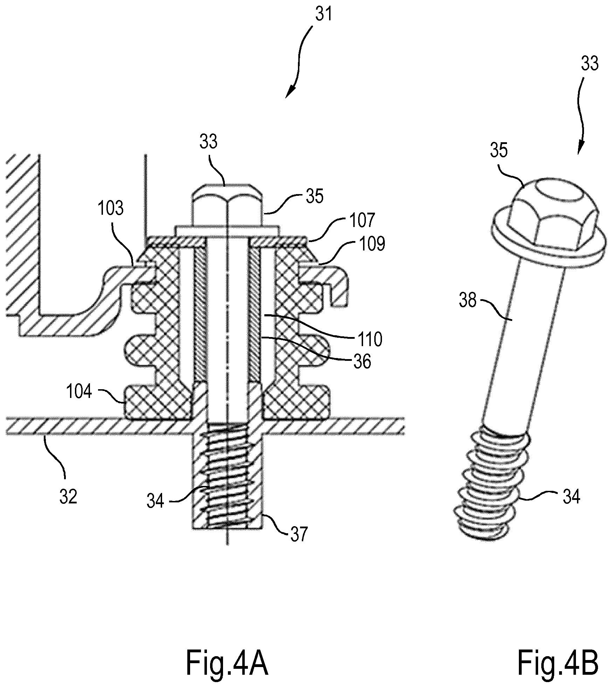

Fig.4A zeigt als Schnittdarstellung in Seitenansicht einen Wäschetrockner 31 im Bereich einer Befestigung eines Kompressors 103 an einer Bodengruppe 32 aus Kunststoff. Fig.4B zeigt in einer Ansicht von schräg oben einen Bolzen 33 zur Befestigung des Kompressors 103 an der Bodengruppe 32.

Der Bolzen 33 weist an seinem vorderen Abschnitt ein Außengewinde 34 auf. Er weist ferner rückwärtig einen Schraubenkopf 35 auf, so dass auf die eigenständige Mutter 108 verzichtet werden kann. Einem Schaft 38 des Bolzens ist ein zusätzliches Metallrohr 36 übergestülpt, mittels dessen sich der Bolzen 33 auf einem Rand des Befestigungsbereichs 37 abstützt. Zwischen Schraubenkopf 35 und Metallrohr 36 ist zusätzlich eine Unterlegscheibe 107 vorgesehen. Auch hierbei können radiale Einkerbungen o.ä. (o. Abb.) an dem Schraubenkopf 35, dem Befestigungsbereich 37 und/oder der Unterlegscheibe 107 vorgesehen sein, um gegen Rotation zu sperren.

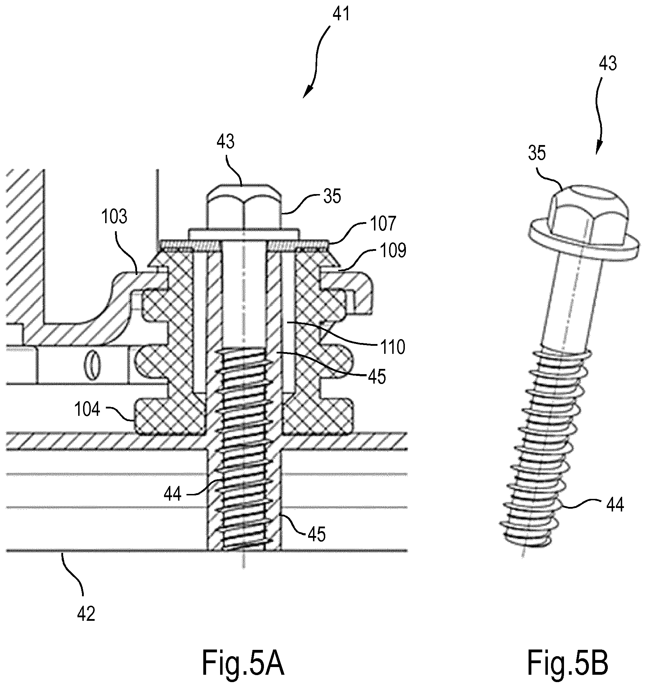

Fig.5A zeigt als Schnittdarstellung in Seitenansicht einen Wäschetrockner 41 im Bereich einer Befestigung eines Kompressors 103 an einer Bodengruppe 42 aus Kunststoff. Fig.5B zeigt in einer Ansicht von schräg oben einen Bolzen 43 zur Befestigung des Kompressors 103 an der Bodengruppe 42. Der Bolzen weist ähnlich dem Bolzen 33 an seinem vorderen Abschnitt ein Außengewinde 44 und an seinem anderen Ende einen Schraubenkopf 35 auf. Jedoch ist nun kein Metallrohr mehr vorhanden. Vielmehr ist ein rohrförmiger Befestigungsbereich 45 der Bodengruppe 42, in den der Bolzen 43 einschraubbar ist, so weit vorgezogen, dass die Unterlegscheibe 107 sich direkt auf einem stirnseitigen Rand des Befestigungsbereichs 45 abstützen kann.

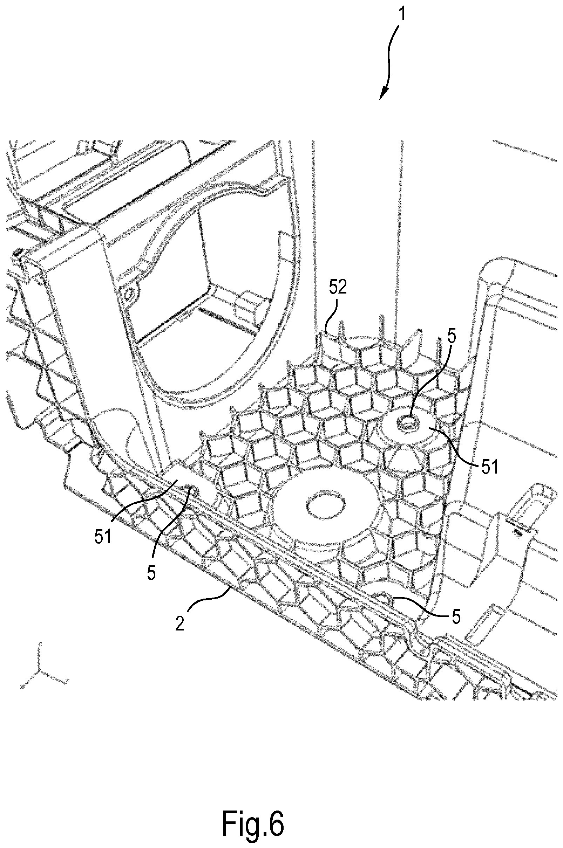

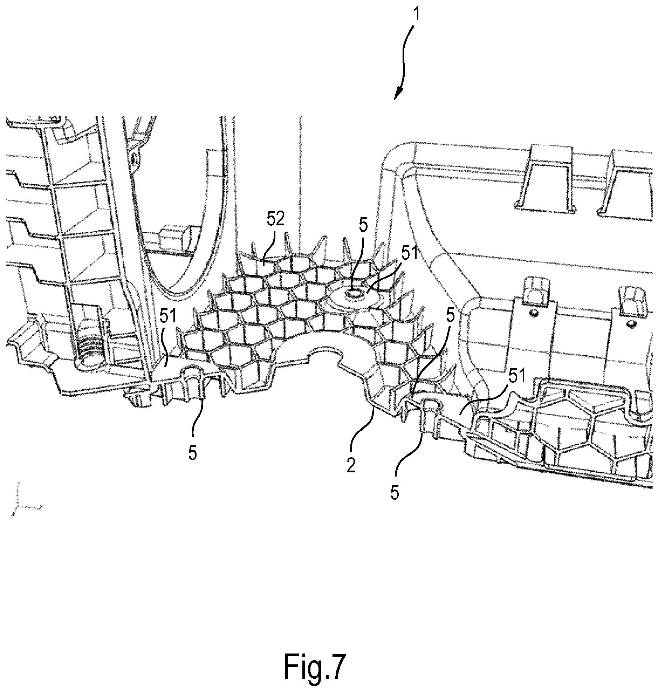

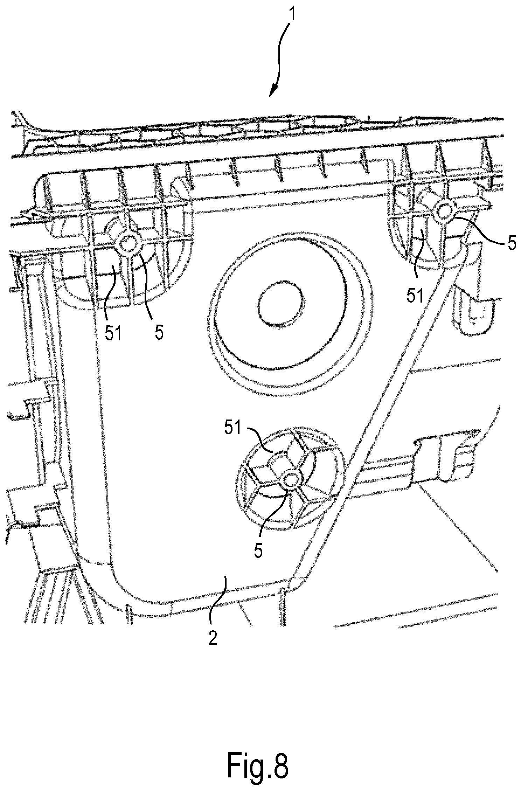

Fig.6 zeigt in einer Ansicht von schräg oben einen Ausschnitt aus der Bodengruppe 2 des Wäschetrockners 1 in einem zur Aufnahme des Kompressors 103 vorgesehenen wannenartigen Bereich. Fig.7 zeigt in einer Ansicht von schräg oben einen weiteren Ausschnitt aus der Bodengruppe 2 in dem zur Aufnahme des Kompressors 103 vorgesehenen Bereich. Fig.8 zeigt den zur Aufnahme des Kompressors 103 vorgesehenen Bereich der Bodengruppe 2 ausschnittsweise in einer Ansicht von schräg unten.

Die drei Befestigungsbereiche 5 sind in schalenartige Strukturen oder Bereiche 51 der Bodengruppe 2 eingebracht, die wiederum in eine rippenartige, insbesondere wabenartige, Struktur 52 übergehen. So werden die Befestigungsbereiche 5 "kraftflussgerecht" an die Umgebung angebunden, um die Kräfte, die durch den Kompressor 103 in die Bodengruppe 2 eingeleitet werden, effektiv bei leichter Bauweise aufzunehmen. Beispielsweise können u-förmige oder trapezförmige Sickenprofile verwendet werden.

In einer Weiterbildung kann die Bodengruppe 2, insbesondere an ihren schalenartigen Bereichen 51 und/oder an ihrer rippenartigen Struktur 52 mit einem Kunststoffmaterial (auch aus einem anderen Material, z.B. aus glasfaserverstärktem Kunststoff) versehen sein. Das Kunststoffmaterial kann z.B. angeschweißt oder angeklebt sein. Als Klebemittel sind z.B. schwingungsabsorbierende Klebemassen geeignet.

In einer anderen Weiterbildung kann Beton und ggf. Bewehrung in die Bodengruppe 2, insbesondere in ihre schalenartigen Bereiche 51 und/oder in ihre rippenartige Struktur 52 eingebracht werden, z.B. zur Versteifung oder sogar zu deren Ersatz. Auf kann so eine verbesserte Dämmung und Schwingungsaufnahme verwirklicht werden.

In noch einer anderen Weiterbildung kann Schaum, Styropor, Vergussmasse, Teer usw. in die Bodengruppe 2, insbesondere in ihre schalenartigen Bereiche 51 und/oder in ihre rippenartige Struktur 52 eingebracht werden, z.B. für eine Versteifung. Auf kann so eine verbesserte Dämmung und Schwingungsaufnahme verwirklicht werden.

Selbstverständlich ist die vorliegende Erfindung nicht auf das gezeigte Ausführungsbeispiel beschränkt.

So können Merkmale der verschiedenen Ausführungsbeispiele auch kombiniert oder ausgetauscht werden. Beispielsweise kann eine Metallhülse auch mit den vierten und fünften Ausführungsbeispielen verwendet werden.

Zudem können die Fig.6 bis 8 auch mit den zweiten bis fünften Ausführungsbeispielen verwendet werden.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Wäschetrockner
- 2: Bodengruppe
- 3: Bolzen
- 4: Vorderer Abschnitt des Bolzens
- 4a: Außengewinde
- 5: Befestigungsbereich
- 6: Schraubenflansch
- 7: Verschraubungsbereich
- 8: Absatz
- 9: Rückwärtiger Abschnitt des Bolzens
- 9a: Außengewinde
- 11: Wäschetrockner
- 12: Bodengruppe
- 13: Bolzen
- 14: Metallbuchse
- 15: Befestigungsbereich
- 16: Außengewinde
- 21: Wäschetrockner
- 22: Bodengruppe
- 23: Bolzen
- 24: Befestigungsbereich
- 25: Flansch
- 26: Einkerbung
- 31: Wäschetrockner
- 32: Bodengruppe
- 33: Bolzen
- 34: Außengewinde
- 35: Schraubenkopf
- 36: Metallrohr
- 37: Befestigungsbereich
- 38: Schaft
- 41: Wäschetrockner
- 42: Bodengruppe
- 43: Bolzen
- 44: Außengewinde
- 45: Befestigungsbereich
- 51: Schalenartiger Bereich
- 52: Rippenartige Struktur
- 101: Wäschetrockner
- 102: Bodengruppe
- 103: Kompressor
- 104: Grommet
- 105: Bolzen
- 106: Metallplatte
- 107: Unterlegscheibe
- 108: Mutter
- 109: Umlaufender Rücksprung
- 110: Durchgangsloch

## Patentansprüche

1. Wäschetrocknungsgerät (1; 11), aufweisend eine Bodengruppe und einen Antrieb (103) einer Wärmepumpe, welcher Antrieb (103) mit mehreren elastischen Grommets (104) verbunden ist und die Grommets (104) mittels Bolzen (3; 13), die durch die Grommets (104) hindurchgeführt sind, an der Bodengruppe (2; 12) befestigt sind, wobei die Grommets (104) direkt auf der Bodengruppe (2; 12;) aufliegen und wobei die jeweiligen Bolzen (3; 13;)
- Schraubbolzen (3; 13) sind, die einen vorderen, mit einem ersten Außengewinde (4a) versehenen Abschnitt (4) und einen rückwärtigen, mit einem zweiten Außengewinde (9a; 16) versehenen Abschnitt (9) aufweisen,
- die jeweiligen Bolzen (3) in hülsenförmige Befestigungsbereiche (5; 14) der Bodengruppe (2) aus Kunststoff oder Metall eingebracht sind,
- mit ihrem vorderen Abschnitt (4) in die Befestigungsbereiche (5) eingeschraubt sind und
- mit ihrem rückwärtigen Abschnitt (9) das zugehörige Grommet (104) fixieren.

2. Wäschetrocknungsgerät (1) nach Anspruch 1, wobei der vordere Abschnitt (4) und der rückwärtige Abschnitt (9) durch einen Einschraubungsabschnitt (7) getrennt sind.

3. Wäschetrocknungsgerät (1) nach Anspruch 2, wobei der vordere Abschnitt (4) von dem Einschraubungsabschnitt (7) durch einen Schraubenflansch (6) getrennt ist.

4. Wäschetrocknungsgerät (1) nach Anspruch 3, wobei an einer dem vordere Abschnitt (4) zugewandten Unterseite des Schraubenflanschs (6) Einkerbungen vorgesehen sind.

5. Wäschetrocknungsgerät (1) nach einem der Ansprüche 2 bis 4, wobei der Einschraubungsabschnitt (7) einen Absatz (8) zu dem rückwärtigen Abschnitt (9) hin bereitstellt.

6. Wäschetrocknungsgerät (11)nach einem der vorhergehenden Ansprüche , wobei die Befestigungsbereiche als Metallhülsen (14) ausgebildet sind, die in Kunststoffmaterial der Bodengruppe (12) eingebettet sind.

7. Wäschetrocknungsgerät nach einem der vorhergehenden Ansprüche, wobei einem Schaft des Bolzens eine Metallhülse übergestülpt ist, die auf einem Rand des Befestigungsbereichs aufliegt.

8. Wäschetrocknungsgerät nach einem der vorhergehenden Ansprüche, wobei eine zwischen dem Bolzen und dem Grommet befindliche Unterlegscheibe direkt auf dem Befestigungsbereich der Bodengruppe aufliegt.

9. Wäschetrocknungsgerät (1; 11) nach einem der vorhergehenden Ansprüche, wobei die Bolzen (3; 13) jeweilige Flansche (6) zur Auflage auf der Bodengruppe (2; 12) aufweisen.

10. Wäschetrocknungsgerät (1) nach einem der vorhergehenden Ansprüche, bei dem die Bodengruppe (2) eine schalenförmige Struktur (51) und/oder eine rippenartige Struktur (52) zur Aufnahme von durch die Bolzen (3) eingebrachten Kräften aufweist und die schalenförmige Struktur (51) und/oder die rippenartige Struktur (52) zumindest teilweise verfüllt ist.

11. Wäschetrocknungsgerät (1) nach Anspruch 10, wobei schalenförmige Struktur (51) und/oder die rippenartige Struktur (52) zumindest teilweise mit Beton verfüllt ist.

## Claims

1. Laundry drying appliance (1; 11), having a bottom group and a drive (103) of a heat pump, which drive (103) is connected to a plurality of elastic grommets (104) and the grommets (104) are fastened to the bottom group (2; 12) by means of bolts (3; 13) which are guided through the grommets (104), wherein the grommets (104) rest against the bottom group (2; 12) directly and wherein the respective bolts (3; 13)
- are screw bolts (3; 13) which have a front section (4) provided with a first outer thread (4a) and a rear section (9) provided with a second outer thread (9a; 16),
- the respective bolts (3) are introduced into sleeve-shaped fastening regions (5; 14) of the bottom group (2) made of plastic or metal,
- are screwed into the fastening regions (5) with their front section (4) and
- secure the associated grommet (104) with their rear section (9).

2. Laundry drying appliance (1) according to claim 1, wherein the front section (4) and the rear section (9) are separated by a screw-in section (7).

3. Laundry drying appliance (1) according to claim 2, wherein the front section (4) is separated from the screw-in section (7) by a screw flange (6).

4. Laundry drying appliance (1) according to claim 3, wherein provision is made for notches on an underside of the screw flange (6), which face the front section (4).

5. Laundry drying appliance (1) according to one of claims 2 to 4, wherein the screw-in section (7) provides an indentation (8) towards the rear section (9).

6. Laundry drying appliance (11) according to one of the preceding claims, wherein the fastening regions are embodied as metal sleeves (14), which are embedded in plastic material of the bottom group (12).

7. Laundry drying appliance according to one of the preceding claims, wherein stacked above a shank of the bolt is a metal sleeve, which rests against an edge of the fastening region.

8. Laundry drying appliance according to one of the preceding claims, wherein a washer located between the bolt and the grommet rests against the fastening region of the bottom group directly.

9. Laundry drying appliance (1; 11) according to one of the preceding claims, wherein the bolts (3; 13) have respective flanges (6) for resting against the bottom group (2; 12).

10. Laundry drying appliance (1) according to one of the preceding claims, in which the bottom group (2) has a tray-shaped structure (51) and/or a rib-like structure (52) for absorbing forces introduced by the bolts (3) and the tray-shaped structure (51) and/or the rib-like structure (52) is at least partially filled.

11. Laundry drying appliance (1) according to claim 10, wherein the tray-shaped structure (51) and/or the rib-like structure (52) is at least partially filled with concrete.

## Revendications

1. Sèche-linge (1; 11) présentant un groupe au sol et l'entraînement (103) d'une pompe à chaleur, lequel entraînement (103) étant raccordé à plusieurs passe-câbles (104) élastiques et ces passe-câbles (104) sont fixés au groupe au sol (2; 12) au moyen de boulons (3; 13) introduits par les passe-câbles (104), les passe-câbles (104) reposant directement sur le groupe au sol (2; 12) et les boulons respectifs (3; 13) étant
- des boulons filetés (3; 13) présentant une section avant munie d'un premier filet extérieur (4a) et une section (9) arrière munie d'un deuxième filet extérieur (9a; 16),
- les boulons (3) respectifs sont insérés dans des zones de fixation tubulaires (5; 14) du groupe au sol (2) en matière synthétique ou en métal,
- sont vissés avec leur section avant (4) dans les zones de fixation (5), et
- fixent avec leur section arrière (9) le passe-câble (104) associé.

2. Sèche-linge (1) selon la revendication 1, la section avant (4) et la section arrière (9) étant séparées par une section de vissage (7).

3. Sèche-linge (1) selon la revendication 2, la section avant (4) étant séparée de la section de vissage (7) par une bride filetée (6).

4. Sèche-linge (1) selon la revendication 3, des rainures étant prévues sur un côté inférieur de la bride filetée (6) tourné vers la section avant (4).

5. Sèche-linge (1) selon l'une des revendications 2 à 4, la section de vissage (7) créant un palier (8) vers la section arrière (9).

6. Sèche-linge (11) selon l'une des revendications précédentes, les zones de fixation étant configurées comme des tubes métalliques (14) noyés dans la matière synthétique du groupe au sol (12).

7. Sèche-linge selon l'une des revendications précédentes, un tube métallique étant enfilé à un arbre du boulon, reposant sur une arête de la zone de fixation.

8. Sèche-linge selon l'une des revendications précédentes, une rondelle se trouvant entre le boulon et le passe-câble reposant directement sur la zone de fixation du groupe au sol.

9. Sèche-linge (1; 11) selon l'une des revendications précédentes, les boulons (3; 13) présentant chacune des brides (6) pour pose sur le groupe au sol (2; 12).

10. Sèche-linge (1) selon l'une des revendications précédentes, dans lequel le groupe au sol (2) présente une structure en cuvette (51) et/ou une structure nervurée (52) pour le captage des forces amenées par les boulons (3) et la structure en cuvette (51) et/ou la structure nervurée (52) est au moins partiellement remplie.

11. Sèche-linge (1) selon la revendication 10, la structure en cuvette (51) et/ou la structure nervurée (52) étant au moins partiellement remplie de béton.
